# EUROPÄISCHE PATENTSCHRIFT

(11) **EP 3 486 695 B1**
(45) Veröffentlichungstag und Bekanntmachung des Hinweises auf die Patenterteilung: **31.07.2024**
(21) Anmeldenummer: 18200010.9
(22) Anmeldetag: 12.10.2018
(51) Int. Cl.: G01S 17/931, G01S 17/42, G01S 7/481, G02B 5/10, G02B 26/08, G02B 26/10, G02B 19/00

(54) **FREIFORMSPIEGEL FÜR EINE SENDEEINRICHTUNG EINER OPTISCHEN ERFASSUNGSVORRICHTUNG, SENDEEINRICHTUNG, OPTISCHE ERFASSUNGSVORRICHTUNG, KRAFTFAHRZEUG UND VERFAHREN**
FREE FORM MIRROR FOR A TRANSMISSION DEVICE OF AN OPTICAL SCANNING DEVICE, TRANSMISSION DEVICE, OPTICAL SCANNING DEVICE, MOTOR VEHICLE AND METHOD
MIROIR DE FORME LIBRE POUR UN DISPOSITIF DE TRANSMISSION D'UN DISPOSITIF DE DÉTECTION OPTIQUE, DISPOSITIF DE TRANSMISSION, DISPOSITIF DE DÉTECTION OPTIQUE, VÉHICULE AUTOMOBILE ET PROCÉDÉ

(30) Priorität: 27.10.2017 DE 102017125184
(43) Veröffentlichungstag der Anmeldung: 22.05.2019
(73) Patentinhaber: Valeo Schalter und Sensoren GmbH, 74321 Bietigheim-Bissingen (DE)
(72) Erfinder: Nguyen, Ho-Hoai-Duc, 74321 Bietigheim-Bissingen (DE)
(74) Vertreter: Withopf, Kristina

(56) Entgegenhaltungen:
- EP-A1- 3 293 441
- WO-A1-2015/074757
- DE-A1- 102013 218 132
- DE-A1- 102016 223 640
- JP-A- H0 963 310

## Beschreibung

Die Erfindung betrifft einen Freiformspiegel für eine Sendeeinrichtung einer optischen Erfassungsvorrichtung für ein Kraftfahrzeug, eine Sendeeinrichtung einer optischen Erfassungsvorrichtung, eine optische Erfassungsvorrichtung für ein Kraftfahrzeug, ein Kraftfahrzeug sowie ein Verfahren zum Herstellen eines Freiformspiegels.

Aus dem Stand der Technik sind Freiformspiegel in verschiedenen Ausprägungen bekannt. Beispielsweise beschreibt die US 7,605,775 B2 ein anzeigendes optisches System, wie beispielsweise einen elektronischen Sucher oder ein Head-Mounted-Display, in welchen ein Freiformspiegel Anwendung finden kann.

In der DE 10 2016 223 640 A1 ist eine Reflexionsplatte als Display, das in einem Fahrzeug installiert ist, dargestellt. Die Reflexionsplatte weist eine erste Lage auf, die aus einem transparenten ersten Kunststoff geformt ist und die eine erste Oberfläche hat. Die Reflexionsplatte weist ferner eine zweite Lage auf, die aus einem transparenten zweiten Kunststoff geformt ist, dessen Brechungsindex der gleiche ist, wie der des ersten Kunststoffs und die an der ersten Oberfläche laminiert ist, wobei eine vorbestimmte Region der ersten Oberfläche als ein Halbspiegel funktioniert, der eine Lichttransmissionseigenschaft und eine Lichtreflexionseigenschaft hat.

Die JP H 09 63310 A beschreibt eine Leuchte für ein Fahrzeug, die einen Spiegel mit einer reflektierenden Oberfläche aufweist, wobei die reflektierende Oberfläche durch Anordnen von jeweiligen rotierenden Parabeln als reflektierende Oberflächenelemente gebildet ist.

Die WO 2015/074757 A1 zeigt eine Spiegelanordnung zur Erzeugung einer Mehrzahl an Strahlbündeln aus dem Strahl einer Lichtquelle, wobei die Mehrzahl an Strahlbündeln zumindest ein erstes Strahlbündel mit einer ersten Hauptstrahlrichtung, ein zweites Strahlbündel mit einer zweiten Hauptstrahlrichtung und bevorzugt weitere Strahlbündeln mit weiteren Hauptstrahlrichtungen aufweist.

Weiterhin offenbart die DE 10 2013 218132 A1 einen Kollektor zur Überführung von EUV-Beleuchtungslicht aus einem Strahlungsquellenbereich hin zu einer Beleuchtungsoptik, die das EUV-Beleuchtungslicht hin zu einem Objektfeld führt, wobei der Kollektor eine Kollektor-Abbildungsoptik aufweist, die den Strahlungsquellenbereich in einen nachgelagerten Fokusbereich abbildet, wobei die Kollektor-Abbildungsoptik so ausgeführt ist, dass mit dem EUV-Beleuchtungslicht, das vom Strahlungsquellenbereich mit Strahlwinkeln kleiner als 20° zu einer optischen Achse zwischen dem Strahlungsquellenbereich und dem nachgelagerten Fokusbereich emittiert wird, die Strahlungsquelle in den nachgelagerten Fokusbereich mit mindestens einem ersten Abbildungsmaßstab abgebildet wird, dass mit dem EUV-Beleuchtungslicht, das vom Strahlungsquellenbereich mit Strahlwinkeln größer als 70° zu einer optischen Achse zwischen dem Strahlungsquellenbereich und dem nachgelagerten Fokusbereich emittiert wird, die Strahlungsquelle in den nachgelagerten Fokusbereich mit mindestens einem zweiten Abbildungsmaßstab abgebildet wird, wobei sich die Abbildungsmaßstäbe um nicht mehr als einen Faktor 2,5 unterscheiden.

Des Weiteren ist in der EP 3 293 441 A1 eine Leuchte mit einem Leuchtenbasiskörper und mit in den Leuchtenbasiskörper einfügbaren Leuchtsegmenten dargestellt. Hierbei strahlt jedes der Leuchtsegmente Licht in gerichteter Weise ab und weist eine vordefinierte Abstrahlcharakteristik auf. Ferner umfassen die Abstrahlcharakteristiken der Leuchtsegmente mindestens zwei unterschiedliche Abstrahlcharakteristiken.

Aus dem Stand der Technik sind weiterhin optische Erfassungsvorrichtungen, wie zum Beispiel Laserscanner, bekannt. Im Hinblick auf solche optischen Erfassungsvorrichtungen ist es zudem bekannt, einen Umgebungsbereich des Kraftfahrzeugs mittels der optischen Erfassungsvorrichtung zu überwachen. Durch die Erfassungsvorrichtung können Objekte in dem Umgebungsbereich des Kraftfahrzeugs detektiert werden und Informationen über die erfassten Objekte, beispielsweise eine relative Lage der Objekte zu dem Kraftfahrzeug, einem Fahrerassistenzsystem des Kraftfahrzeugs bereitgestellt werden. Das Fahrerassistenzsystem kann basierend auf diesen Informationen beispielsweise Maßnahmen zur Vermeidung einer Kollision des Kraftfahrzeugs mit dem Objekt einleiten, beispielsweise das Kraftfahrzeug vor der Kollision automatisch abbremsen.

Bei Laserscannern gemäß dem Stand der Technik wird von einer Sendeeinrichtung des Laserscanners üblicherweise ein Lichtstrahl beziehungsweise Strahlenbündel in den Umgebungsbereich ausgesendet und der Umgebungsbereich durch Verändern eines Abtastwinkels beziehungsweise einer Abtastrichtung abgetastet beziehungsweise abgescannt. Sobald der Lichtstrahl auf ein Objekt in dem Umgebungsbereich trifft, wird zumindest ein Teil des Lichtstrahls an dem Objekt zurück zu dem Laserscanner reflektiert. Eine Empfangseinrichtung des Laserscanners empfängt den reflektierten Teil des Lichtstrahls und bestimmt anhand einer Laufzeit des Lichtstrahls beziehungsweise einer Zeitdauer zwischen dem Aussenden des Lichtstrahls und dem Empfangen des reflektierten Teils des Lichtstrahls einen Abstand des Objekts bezüglich des Kraftfahrzeugs. Unter Kenntnis des Abtastwinkels beim Aussenden des Lichtstrahls kann außerdem eine Orientierung beziehungsweise eine Richtung des Objekts zu dem Kraftfahrzeug bestimmt werden. Aus der Orientierung sowie dem Abstand kann dann die relative Lage des Objekts zu dem Kraftfahrzeug bestimmt werden.

Zum Verändern des Abtastwinkels wird der Lichtstrahl beziehungsweise das Strahlenbündel üblicherweise von einer Ablenkeinheit der Sendeeinrichtung abgelenkt. Die Ablenkeinheit ist dabei in der Regel als ein rotierbarer beziehungsweise schwenkbarer Spiegel ausgebildet, welcher den Lichtstrahl entlang der unterschiedlichen Abtastrichtungen reflektiert, wobei die Abtastrichtung über einen Schwenkwinkel beziehungsweise eine Orientierung des schwenkbaren Spiegels eingestellt wird. Ein Umgebungsbereich, innerhalb welchem der Lichtstrahl ablenkbar ist, bildet dabei ein Sichtfeld der Sendeeinrichtung.

Um dabei in der Horizontalen ein möglichst großes Sichtfeld zu erreichen, insbesondere bei begrenzter Dimensionierung des schwenkbaren Spiegels, wird ein solcher Spiegel üblicherweise in einem vorbestimmten festen Winkel gegenüber der Haupteinstrahlrichtung des Laser-Strahlenbündels geneigt, was jedoch zu einer unerwünschten Verzerrung des Sichtfelds führt. Soll beispielsweise zur Abtastung eine Linie, welche vertikal, d.h. parallel zur Fahrzeughochachse, verlaufen soll, bereitgestellt werden, so führt diese beschriebene Verzerrung jedoch dazu, dass solche Scanlinien gegenüber der Vertikalen und abhängig vom Abtastwinkel geneigt sind. Insbesondere ist diese Neigung umso größer, je größer der Abtastwinkel ist. Über mehrere Abtastzeitschritte betrachtet ergeben sich also nicht vielzählige in vertikaler Richtung parallel verlaufende Abtastlinien, sondern ein Abtastlinienbild mit fächerförmiger Struktur, weshalb dieser Verzerrungseffekt auch als Smiley-Effekt oder Bananen-Effekt bezeichnet wird.

Durch optische Kompensationsmaßnahmen, wie beispielsweise speziell geformte Korrekturspiegel oder Freiformspiegel, kann der Bananen-Effekt zwar in seiner Ausprägung reduziert werden, jedoch haben solche herkömmlichen Freiformspiegel den Nachteil, dass diese aufgrund ihrer zur Kompensation erforderlichen zum Teil sehr starken Krümmung unweigerlich zu einer starken Divergenz des Strahlenbündels führen würden, was einen sehr geringen Q-Faktor nach sich zieht. Dieser ist definiert als das Verhältnis aus Frequenz und Halbwertsbreite beziehungsweise FWHM (Full Width Half Maximum). Hieraus ergibt sich also eine Degradierung der Qualität des Strahlenbündels, was sich wiederum negativ auf die Messgenauigkeit auswirkt. Hinzu kommt auch die Problematik, dass gerade bei Anwendungen im Kraftfahrzeugbereich der zur Verfügung stehende Bauraum für Sensoren stark begrenzt ist, so dass komplexe optische Systeme aus platzgründen nicht realisierbar sind und zudem sehr teuer wären.

Aufgabe der vorliegenden Erfindung ist es daher, einen Freiformspiegel für eine Sendeeinrichtung einer optischen Erfassungsvorrichtung, eine Sendeeinrichtung, eine optische Erfassungsvorrichtung, ein Kraftfahrzeug sowie ein Verfahren zum Herstellen eines Freiformspiegels anzugeben, mittels welchen sich in Hinblick auf die oben beschriebenen Problematiken zumindest eine Verbesserung ermöglichen lässt.

Diese Aufgabe wird gelöst durch ein Freiformspiegel, eine Sendeeinrichtung, eine optische Erfassungsvorrichtung, ein Kraftfahrzeug und ein Verfahren mit den Merkmalen gemäß den jeweiligen unabhängigen Ansprüchen. Vorteilhafte Ausführungsformen der Erfindung sind Gegenstand der abhängigen Patentansprüche, der Beschreibung sowie der Figuren.

Ein erfindungsgemäßer Freiformspiegel für eine Sendeeinrichtung einer optischen Erfassungsvorrichtung weist eine erste Seite mit einer zumindest bereichswiese reflektierenden ersten Oberfläche auf, die mit einer reflektierenden Beschichtung ausgebildet ist. Dabei ist die erste Oberfläche in einer ersten Richtung in mehrere reflektierende Oberflächensegmente gegliedert, wobei ein jeweiliges Oberflächensegment zwei Oberflächensegmentgrenzen aufweist, die das zugeordnete Oberflächensegment in und entgegen der ersten Richtung begrenzen, und wobei die erste Oberfläche so ausgebildet ist, dass je zwei benachbart angeordnete Oberflächensegmente an ihren einander zugewandten Oberflächensegmentgrenzen zumindest eine um einen endlichen Wert voneinander verschiedene Orientierung und / oder zumindest einen zueinander ausgebildeten räumlichen Versatz aufweisen, sodass eine Reflexionseigenschaft der ersten Oberfläche in ihrem Verlauf über die Oberflächensegmentgrenzen hinweg unstetig ist. Weiterhin weist die erste Oberfläche ein zentrales Oberflächensegment und in und entgegen der ersten Richtung in Bezug auf das zentrale Oberflächensegment jeweils mindestens ein erstes Oberflächensegment auf.

Der erfindungsgemäße Freiformspiegel weist also vorteilhafterweise eine der ersten Richtung, insbesondere nur in der ersten Richtung, segmentierte, zumindest bereichsweise reflektierende, das heißt spiegelnde, Oberfläche auf, die aufgrund ihrer Gliederung in die einzelnen Oberflächensegmente nun vorteilhafterweise deutlich besser hinsichtlich der Erzielung unterschiedlicher Wirkungen optimiert werden können. Dies ist durch mehrere Faktoren bedingt. Einerseits werden üblicherweise zur Ausbildung bzw. Berechnung der Formgebung solcher Freiformspiegel in Anpassung an die gewünschte Anwendung Simulationen verwendet, in welchen eine Lichtquelle simuliert und die Orientierung einzelner Bereiche des Freiformspiegels in Anpassung an die zu erzeugende Lichtverteilung berechnet wird. Als Randbedingungen muss dabei jedoch berücksichtigt werden, dass die Spiegeloberfläche einen glatten Verlauf, d.h. ohne Knicke oder Unstetigkeitsstellen, hat, da an solchen Stellen das Licht unkontrolliert gestreut werden würde. Zu diesem Zweck kommen sogenannte Glättungsfunktionen zum Einsatz, die aus den in der Simulation für einzelne Punkte der Freiformspiegeloberfläche berechneten jeweiligen "idealen" Orientierungen eine geglättete und stetig differenzierbare Oberfläche generieren. Die Anwendung solcher Glättungsfunktionen bedingt aber damit auch, dass es Abweichungen zwischen den jeweiligen idealen Orientierungen der jeweiligen Oberflächenbereiche des Freiformspiegels und den nach Glättung der Oberfläche erhaltenen tatsächlichen Orientierungen gibt. Dies wiederum bedingt, dass sich eine gewünschte durch den Freiformspiegel zu erreichende Abbildung nur näherungswiese umsetzten lässt. Dieser Effekt, das heißt die Abweichung zwischen gewünschter und tatsächlicher Abbildung, ist dabei umso drastischer, je größer die mittels einer Glättungsfunktion zu glättende Freiformspiegelfläche ist. Durch die Segmentierung der ersten Oberfläche des Freiformspiegels lässt es sich nun vorteilhafterweise erreichen, dass die zur Erzielung bestimmter Abbildungseigenschaften zu optimierenden, und zum Beispiel zu glättende Flächen, nun deutlich kleiner sind, wodurch sich eine deutlich präzisere Ausbildung bestimmter optischer Eigenschaften erzielen lässt. Eine Kompensation des Bananen-Effekts lässt sich durch die Segmentierung der Oberfläche damit deutlich effektiver erreichen. Die durch die Segmentierung entstehenden Unstetigkeiten im Verlauf der Reflexionseigenschaften in den die Segmentgrenzen umfassenden Grenzbereichen zwischen den jeweiligen Oberflächensegmenten wirken sich jedoch für die vorliegenden Anwendungen, insbesondere bei der Verwendung des Freiformspiegels in einer optischen Erfassungsvorrichtung wie einem Laserscanner, nicht nachteilig aus, da die Beleuchtung dieser Grenzbereiche wie nachfolgend noch näher erläutert wird, auf einfache Weise vermieden werden kann.

Ein weiterer großer Vorteil besteht zudem auch darin, dass durch die einfachere Anpassungsmöglichkeiten, welche durch die Segmentierung erreicht wird, auch die für eine ausreichende Kompensation des Bananen-Effekts erforderliche Krümmung der reflektierenden Oberfläche im Mittel reduziert werden kann, so dass sich durch die reduzierte Krümmung wiederum eine Reduktion der Strahldivergenz erreichen lässt. Da zudem durch die Segmentierung der spiegelnden Oberfläche extrem starke Krümmungen der genutzten spiegelnden Oberfläche vermieden werden können, ergeben sich hierdurch auch Vorteile in Bezug auf die Positionierung des Freiformspiegels. Denn dieser kann somit deutlich einfacher und mit weniger Aufwand in Bezug auf andere optische Komponenten positioniert werden, da sich durch die weniger stark gekrümmten Oberflächenbereiche des Freiformspiegels kleine Abweichungen von einer korrekten Positionierung deutlich weniger stark auswirken, zum Beispiel auf die durch den Freiformspiegel letztendlich bereitgestellte Lichtverteilung. Deutliche Verbesserungen lassen sich durch den segmentierten Freiformspiegel aber noch aus anderen Gründen erzielen: Bei typischen Kraftfahrzeuganwendungen, bei welchen Laserscanner zum Einsatz kommen, werden Laserscanner üblicherweise so am Kraftfahrzeug angeordnet, dass das Sichtfeld des Laserscanner den frontseitigen oder heckseitigen Umfeldbereich des Kraftfahrzeugs abdeckt, so dass zum Beispiel ein Umfeldbereich von ± 75° in Bezug auf die Fahrzeuglängsachse in der Horizontalen durch das Sichtfeld eines solchen Laserscanners abgedeckt ist. Bei solchen Anwendungen ist üblicherweise der zentrale Sichtfeldbereich des Laserscanners, also zum Beispiel der Bereich ±30° in Bezug auf die Fahrzeuglängsachse besonders relevant, da es für die meisten Assistenzfunktionen, zum Beispiel Kollisionsvermeidungssysteme, des Kraftfahrzeugs, die auf einer Umfelderfassung basieren, am wichtigsten ist zu wissen, was sich direkt vor oder hinter dem Kraftfahrzeug befindet. Damit ist eine möglichst hohe Erfassungsgenauigkeit in diesem zentralen Sichtfeldbereich besonders relevant. Andererseits kommt der oben beschriebene Bananen-Effekt in diesem zentralen Sichtfeldbereiche kaum zum Tragen sondern macht sich vielmehr erst bei größeren Winkeln bemerkbar. Diese Erkenntnis kann nun vorteilhafterweise ebenfalls genutzt werden, um beispielsweise unterschiedliche Segmente des Freiformspiegels in Bezug auf unterschiedlichen Kriterien zu optimieren. Hierdurch wird es vorteilhafterweise ermöglicht, Verzerrungen, wie den oben beschriebenen Bananen-Effekt vor allem für große Abtastwinkelbereiche zu kompensieren, und gleichzeitig auch bestimmte Sichtfeldbereiche, zum Beispiel den Zentralen, hinsichtlich der Strahlqualität zu optimieren. Da diese Eigenschaften, das heißt die Kompensation des Bananen-Effekts bei gleichzeitiger Reduktion der Strahldivergenz, zudem durch einen einzelnen Freiformspiegel bereitgestellt werden können, können hierdurch auch enorm Bauraum und Kosten gespart werden, was insbesondere bei der Verwendung dieses Freiformspiegels in Systemen oder Einrichtungen mit begrenzten Bauraum besonders von Vorteil ist, wie dies beispielsweise bei Laserscanner in der Fall ist. Zudem sind durch die Bereitstellung eines einzelnen Freiformspiegels, die Lichtverluste deutlich geringer, als wenn diese Eigenschaften durch einen herkömmlichen Freiformspiegel und weitere optische Komponenten, wie beispielsweise Linsen, umgesetzt werden würden.

Wenngleich sich auch der Freiformspiegel besonders für Sendeeinrichtungen von optischen Erfassungsvorrichtungen, wie Laserscanner eignet, so ist jedoch vorteilhafterweise den Einsatzgebieten dieses Freiformspiegels keine Grenzen gesetzt. Insbesondere kann dieser erfindungsgemäße Freiformspiegel und seine Ausführungsformen in jedem beliebigen optischen System Anwendung finden, in welchem eine gewünschte Entzerrung oder Veränderung einer gegebenen Lichtverteilung bei gleichzeitiger Optimierung der Strahlqualität und des Q-Faktors durch Vermeidung zu starker Divergenz erreicht werden soll.

Unter einer Divergenz eines Strahlenbündels ist dabei eine Zunahme der Halbwertsbreite (FWHM) in Ausbreitungsrichtung des Lichts zu verstehen, welche üblicherweise mit einem Winkel angegeben wird, der den Öffnungswinkel des divergierenden beziehungsweise auseinanderlaufenden Strahlenbündels beschreibt.

Um die Oberflächensegmente bereitzustellen, an deren Segmentgrenzen die Reflexionseigenschaften einen unstetigen Verlauf aufweisen, gibt es nun verschiedene Möglichkeiten. Es ist vorteilhaft, wenn je zwei benachbart angeordnete Oberflächensegmente an ihren einander zugewandten Oberflächensegmentgrenzen zumindest eine um einen endlichen Wert voneinander verschiedene Orientierung und/oder Position aufweisen. Die Oberflächensegmente sind direkt aneinander angrenzend ausgebildet, sodass die Oberflächensegmentgrenze eines Oberflächensegments in der ersten Richtung gleichzeitig auch die Oberflächensegmentgrenze eines in der ersten Richtung benachbart angeordneten Oberflächensegments darstellt, wobei der Verlauf der ersten Oberfläche an dieser gemeinsamen Oberflächensegmentgrenze geknickt ist und dadurch die Oberflächensegmente an dieser gemeinsamen Oberflächensegmentgrenze eine unterschiedliche Orientierung aufweisen. Beispielsweise weist also der Normalenvektor der ersten Oberfläche im Verlauf über diese gemeinsame Oberflächensegmentgrenze hinweg einen Sprung an dieser Grenze auf, das heißt seine Richtung ändert sich sprunghaft. Alternativ oder zusätzlich sind die einzelnen Oberflächensegmente auch nicht aneinander angrenzend, sondern beispielsweise auch beabstandet, durch einen räumlichen Versatz zum Beispiel durch eine Sprungkante oder Stufe oder ähnliches, angeordnet. Daraus ergeben sich noch weitaus mehr Freiheitsgrade in Bezug auf die Auslegung und Anordnung der einzelnen Oberflächensegmente.

Es ist weiterhin vorteilhaft, wenn die erste Oberfläche ein zentrales Oberflächensegment und in und entgegen der ersten Richtung in Bezug auf das zentrale Oberflächensegment jeweils mindestens ein erstes Oberflächensegment aufweist. Wie bereits eingangs beschrieben sind gerade an einen zentralen Sichtfeldbereich besonders hohe Anforderungen bezüglich einer möglichst hohen Erfassungsgenauigkeit zu stellen. Durch die Erfindung ist es möglich, einen solchen zentralen Sichtfeldbereich dem zentralen Oberflächensegment zuzuordnen und dieses speziell für die Anforderungen eines solchen zentralen Sichtfeldbereichs zu optimieren. In äußeren Bereichen, d.h. für größere Erfassungswinkel, können die Kriterien für die Optimierung der einzelnen Oberflächensegmente anders ausgestaltet sein.

Bei einer vorteilhaften Ausgestaltung der Erfindung ist die erste Oberfläche im Bereich zumindest eines der ersten Oberflächensegmente dazu ausgebildet, eine, insbesondere über mehrere Zeitschritte hinweg, auf das erste Oberflächensegment in zumindest einer Einstrahlrichtung einstrahlbare erste Lichtverteilung, welche in ihrer Gesamtheit, insbesondere über die mehreren Zeitschritte hinweg, in einer ersten Ebene senkrecht zur zumindest einen Einstrahlrichtung auf das erste Oberflächensegment einstrahlbar ist, durch zwei nicht parallele erste Geraden welche einen ersten Winkel zueinander aufweisen begrenzt ist, auf eine einen Teil eines Sichtfeld bereitstellende Lichtverteilung abzubilden, welche in einer zweiten Ebene senkrecht zu zumindest einer bestimmten Abstrahlrichtung durch zwei zweite Geraden begrenzt ist, die einen zweiten Winkel zueinander aufweisen, der kleiner ist als der erste Winkel.

Der zweite Winkel kann dabei insbesondere auch Null sein, sodass die zweiten Geraden parallel oder zumindest nahezu parallel sind. Mit anderen Worten ist der Freiformspiegel also dazu ausgelegt, eine auf den Freiformspiegel im ersten Oberflächensegment zeitlich sequentiell eingestrahlte Lichtverteilung, welche zum Beispiel eine Linienstruktur aufweist mit mehreren voneinander beabstandet Linien, bei welcher die Linien jedoch einen mehr oder weniger großen Winkel miteinander einschließen, auf eine Lichtverteilung mit einer Linienstruktur abzubilden, in welcher nun alle Linien parallel zueinander verlaufen oder zumindest die Neigung zwischen den Linien im Vergleich zur auf den Freiformspiegel eingestrahlten Lichtverteilung reduziert ist. Über mehrere Zeitschritte hinweg ist dabei vorzugsweise so zu verstehen, dass bei der Anwendung dieses Freiformspiegels in einem Laserscanner üblicherweise solche einzelnen Linien, die durch ein in einer Richtung ausgedehntes Strahlenbündel bereitgestellt werden, nicht gleichzeitig sondern in einer zeitlichen Abfolge mehrerer aufeinanderfolgende Zeitschritte auf den Freiformspiegel, insbesondere auf dessen einzelne Oberflächensegmente, eingestrahlt und von diesem abgestrahlt und in beschriebener Weise abgebildet werden.

Die erste und zweite Ebene bezeichnen hierbei im Allgemeinen Schnittebenen, die nicht parallel zu den Einstrahlrichtungen beziehungsweise Abstrahlrichtungen verlaufen.

Hierdurch lässt sich vorteilhafterweise der sogenannte Bananen-Effekt zumindest in äußeren Sichtfeldbereichen, in welchen sich dieser Effekt auch hauptsächlich auswirkt, kompensieren. Vor allem lässt sich durch die Segmentierung der ersten Oberfläche und der dadurch entstehenden deutlich kleineren Einzelbereiche eine deutlich bessere Kompensation des Bananen-Effekts als durch herkömmliche nicht segmentierte Freiformspiegel erreichen.

Beispielsweise haben Versuche mit herkömmlichen, nicht segmentierten Freiformspiegeln zur Kompensation des Bananen-Effekts ergeben, dass sich bei den üblicherweise in einem Laserscanner zur Verfügung stehenden Ausdehnungen für einen solchen Kompensationsspiegel immer noch eine Abweichung von mindestens 1° von der Vertikalen bei einem Abstrahlwinkel beziehungsweise Scanwinkel von 35° ergibt, während sich der Bananen-Effekt bei einem Scanwinkel von 35° mit einem erfindungsgemäßen segmentierten Freiformspiegel, insbesondere bei einem Scanwinkel von 35°, vollständig kompensieren lässt.

Gemäß einer weiteren vorteilhaften Ausgestaltung der Erfindung ist die erste Oberfläche derart ausgebildet, dass eine Vergrößerung einer Divergenz eines auf die erste Oberfläche im zentralen Oberflächensegment eingestrahlten Lichtbündels bei dessen Reflexion geringer ist als eine Vergrößerung einer Divergenz eines auf das erste Oberflächensegment eingestrahlten Lichtbündels bei dessen Reflexion. Hierdurch lässt sich vorteilhafterweise gerade im zentralen Bereich eine besonders hohe Strahlqualität und dabei ein besonders hohes Auflösungsvermögen und eine besonders hohe Erfassungsqualität bereitstellen. Vorzugsweise ist der Freiformspiegel so ausgestaltet, dass ein im zentralen Oberflächensegment reflektierter Lichtstrahl eine Divergenz von maximal 0,1° aufweist, während ein im ersten Oberflächensegment reflektierter Lichtstrahl nach dessen Reflexion eine Divergenz von zum Beispiel maximal 0,7° aufweist. Eine im zentralen Oberflächensegment reduzierte Divergenz kann sich zum Beispiel auf einfache Weise durch reduzierte Krümmung der ersten Oberfläche im Bereich des zentralen Oberflächensegments bereitstellen lassen.

Daher stellt es eine weitere vorteilhafte Ausgestaltung der Erfindung dar, wenn das zentrale Oberflächensegment eine mittlere Krümmung aufweist, die geringer ist als eine mittlere Krümmung der jeweiligen zumindest einen ersten Oberflächensegmente. Wie eingangs beschrieben wirkt sich der Bananen-Effekt im zentralen Sichtfeldbereich, und damit auch im zentralen Bereich des Freiformspiegels kaum oder deutlich weniger stark aus als im Randbereich, sodass zu dessen Kompensation ohnehin keine starke Krümmung der reflektierenden Oberfläche im zentralen Oberflächensegment erforderlich ist, was nun vorteilhafterweise dazu genutzt werden kann, die Strahldivergenz im zentralen Bereich deutlich stärker zu reduzieren, als in äußeren Bereichen, sowohl des Freiformspiegels als auch in dem über diesen bereitgestellten Sichtfeld. Weist der Freiformspiegel beispielsweise mehr als drei Oberflächensegmente, zum Beispiel fünf oder sieben Oberflächensegmente auf, so kann es weiterhin vorgesehen sein, dass die mittlere Krümmung der jeweiligen Oberflächensegmente ausgehend vom zentralen Oberflächensegment in und entgegen der ersten Richtung ausgehend vom zentralen Oberflächensegment im Mittel von Segment zu Segment zunimmt. Hierdurch lässt sich eine optimale Situationsanpassung erzielen.

Dabei kann es zum Beispiel vorgesehen sein, dass das zentrale Oberflächensegment eben ist. Durch eine ebene, spiegelnde Fläche wird die Divergenz des reflektierten Strahlenbündels gegenüber einem einfallenden Strahlenbündel nicht erhöht, sodass vorteilhafterweise die Divergenz des reflektierten Lichtstrahls durch eine ebene Ausbildung des zentralen Oberflächensegment auf ein Minimum reduziert werden kann.

Weiterhin ist es bevorzugt, dass der Freiformspiegel derart ausgebildet ist, dass die oben beschriebenen Funktionen und Eigenschaften mit Bezug auf die jeweiligen Oberflächensegmente mit Bezug auf eine auf den Freiformspiegel eingestrahlte Lichtverteilung umsetzbar sind, die durch ein oder mehrere Strahlenbündel bereitstellbar ist, welches nicht kollimiert ist, sondern auseinanderläuft, und insbesondere von einem gemeinsamen Abstrahlbereich stammt, der kleiner ist als die durch das Strahlenbündel beleuchtete Fläche des Freiformspiegels. Hierdurch ist der Freiformspiegel besonders gut an die Gegebenheiten in einem Laserscanner angepasst.

Weiterhin ist es bevorzugt, dass der Freiformspiegel ohne Hinterschneidung ausgebildet ist. Dies hat den großen Vorteil, dass der Freiformspiegel auf besonders einfache und kostengünstige Weise mittels eines Spritzgussverfahrens hergestellt werden kann.

Vorzugsweise ist die reflektierende Eigenschaft der ersten Oberfläche durch eine reflektierende Beschichtung bereitgestellt, die zum Beispiel ein metallisches Material umfassen kann, da solche metallischen Materialien besonders gut geeignet sind, um die reflektierenden Eigenschaften bereitzustellen. Im Prinzip kommt hierzu jedes beliebige metallische Material in Frage. Beispiele hierfür sind Gold, Silber, Aluminium und/oder Kupfer. Auch kommen als Beschichtung beliebig ausgebildete Legierungen in Frage. Silber zeichnet sich dabei vor allen anderen durch seine besonders hohe Reflexivität aus.

Des Weiteren betrifft die Erfindung auch eine Sendeeinrichtung für eine optische Erfassungsvorrichtung eines Kraftfahrzeugs, wobei die Sendeeinrichtung einen erfindungsgemäßen Freiformspiegel oder eines seiner Ausführungsformen aufweist. Die für den erfindungsgemäßen Freiformspiegel und seine Ausführungsformen beschriebenen Merkmale, Merkmalskombinationen und deren Vorteile gelten dabei in gleicher Weise für die erfindungsgemäße Sendeeinrichtung.

Vorzugsweise weist die Sendeeinrichtung eine Lichtquelle zur Bereitstellung mindestens eines Strahlenbündels auf und eine Ablenkeinrichtung, welche dazu ausgelegt ist, das mindestens eine Strahlenbündel gepulst in aufeinanderfolgenden Zeitschritten in unterschiedliche vorbestimmte Einstrahlrichtungen abzulenken und auf die erste Oberfläche des Freiformspiegels einzustrahlen, wobei eine jeweilige Einstrahlrichtung zu einer jeweiligen Abstrahlrichtung, in welcher das auf die erste Oberfläche des Freiformspiegels eingestrahlte Strahlenbündel nach Reflexion an der ersten Oberfläche des Freiformspiegels abgestrahlt wird, korrespondiert.

Die Lichtquelle kann beispielsweise auch mehrere Einzellichtquellen umfassen. Beispielsweise umfasst die Lichtquelle mindestens eine Laserdiode, vorzugsweise auch mehrere Laserdioden, wie beispielsweise ein Laserdioden-Array. Vorteilhafterweise wird so je nach aktueller Einstrahlungsrichtung der Einstrahlung des Strahlenbündels auf den Freiformspiegel dieses Strahlenbündel in eine bestimmte Abstrahlrichtung, beziehungsweise in einen jeweiligen Abstrahlbereich abgestrahlt. Durch Variation, insbesondere zeitliche Variation der Einstrahlungsrichtungen kann so vorteilhafterweise ein vorbestimmter Umgebungsbereich, insbesondere das Sichtfeld der Sendeeinrichtung, abgescannt werden.

Bei einer besonders vorteilhaften Ausgestaltung ist die Sendeeinrichtung dazu ausgelegt, das gepulste Strahlenbündel zeitlich sequentiell auf die jeweiligen Oberflächensegmente ausschließlich innerhalb der die jeweiligen Oberflächensegmente begrenzenden Oberflächensegmentgrenzen einzustrahlen. Im Gegensatz zu den Segmentgrenzen zwischen den Oberflächensegmenten ist der Verlauf der Oberfläche innerhalb der jeweiligen Oberflächensegmente stetig differenzierbar, zumindest in den Regionen, auf welche das gepulste Strahlenbündel eingestrahlt wird. Auf diese Weise lässt es sich bewerkstelligen, dass das gepulste Strahlenbündel nicht auf Bereiche der ersten Oberfläche auftrifft, in welche die Reflexionseigenschaften einen unstetigen Verlauf aufweisen. Eine unerwünschte Lichtstreuung an diesen Grenzbereichen kann so vorteilhafterweise vermieden werden. Bewerkstelligen lässt sich dies auf einfache Weise durch eine Abstimmung zwischen der Pulsfrequenz, Pulsdauer, und der Stellung beziehungsweise Orientierung des Ablenkspiegels während der Aussendung eines Lichtpulses relativ zum Freiformspiegel.

Bei einer weiteren vorteilhaften Ausgestaltung der Erfindung weist die Ablenkeinheit einen Spiegel mit einer Spiegelebene auf. Der Spiegel stellt dabei vorzugsweise einen MEMS (Mikroelektromechanisches System)-Spiegel dar. Weiterhin ist die Sendeeinrichtung vorzugsweise derart eingerichtet, dass das mindestens eine von der Lichtquelle bereitgestellte Lichtbündel in einer Haupteinstrahlrichtung auf die Spiegelebene einstrahlbar ist, wobei der Spiegel derart angeordnet ist, dass die Spiegelebene gegenüber der Haupteinstrahlrichtung um einen festen dritten Winkel um eine erste Achse senkrecht zur Haupteinstrahlrichtung geneigt ist und um verschiedene vorbestimmte vierte Winkel um eine zweite zur ersten Achse senkrecht stehende zweite Achse schwenkbar ist, insbesondere wobei die erste und die zweite Achse in der Spiegelebene verlaufen. Durch Schwenken des Spiegels um die zweite Achse beziehungsweise durch Einstellen des Spiegels in jeweiligen Zeitschritten auf unterschiedliche vierte Winkel kann vorteilhafterweise eine Ablenkung des eingestrahlten Strahlenbündels in die unterschiedlicher Einstrahlrichtungen auf den Freiformspiegel bereitgestellt werden.

Durch die zusätzliche Neigung der Spiegels um den festen dritten Winkel kann vorteilhafterweise ein besonders großes Sichtfeld in zumindest einer Richtung, insbesondere in horizontaler Richtung bezogen auf die bestimmungsgemäße Einbaulage in einem Kraftfahrzeug, bereitgestellt werden. Dieser feste Winkel bedingt aber zugleich den beschriebenen Bananen-Effekt, weshalb gerade die Verwendung des erfindungsgemäßen Freiformspiegels oder eines seiner Ausgestaltungen in dieser Anordnung besonders vorteilhaft ist. So lässt sich durch diese Anordnung gleichzeitig ein besonders großes Sichtfeld unverzerrt und mit sehr hoher Strahlqualität vor allem im zentralen Sichtfeldbereich bereitstellen. Der feste erste Winkel ist dabei zum Beispiel als Winkel zwischen der Haupteinstrahlrichtung und der Spiegelebene definiert, und beträgt zwischen 0 und 90°, vorzugsweise zwischen 10 und 80°, zum Beispiel 57°. Je kleiner dieser Winkel ist, beziehungsweise je größer der Winkel zwischen der Flächennormalen der Spiegelebene und der Haupteinstrahlrichtung ist, desto größer ist auch der Bananen-Effekt. Vorzugsweise lässt sich durch diese Anordnung ein Sichtfeld bereitstellen, welches zumindest in einer Richtung einen Öffnungswinkel von mindestens 100°, insbesondere vorzugsweise mindestens 150° aufweist. Weiterhin ist es bevorzugt, dass das Sichtfeld in einer dazu senkrechten Richtung, wie beispielsweise in der vertikalen Richtung, einen Öffnungswinkel von mindestens 10°, insbesondere mindestens 20°, wie beispielsweise 26° aufweist.

Bei einer weiteren vorteilhaften Ausgestaltung ist die Sendeeinheit derart eingerichtet, dass für vierte Winkel des Spiegels kleiner als ein vorbestimmter Grenzwert in Bezug auf eine Nullstellung des Spiegels, in welcher die erste Achse senkrecht zur Haupteinstrahlrichtung ausgerichtet ist, das Strahlenbündel auf das zentrale Oberflächensegment eingestrahlt wird. Für kleine Ablenkwinkel des Spiegels, d.h. für kleine vierte Winkel, ist der durch den festen dritten Winkel verursachte Bananen-Effekt ebenfalls relativ gering, sodass es besonders vorteilhaft ist, den Freiformspiegel so in Bezug zur Ablenkeinheit anzuordnen, dass nur das zentrale Oberflächensegment für solche kleine Ablenkwinkel gepulst beleuchtet wird, so dass das zentrale Oberflächensegment auf einfache Weise auf die Reduktion der Strahldivergenz hin optimiert werden kann, was gerade für das zentrale Sichtfeld eine besonders hohe Erfassungsgenauigkeit liefert.

Weiterhin kann es vorgesehen sein, dass durch die Sendeeinrichtung in einzelnen Zeitschritten nicht nur Abtastpunkte sondern Abtastlinien bereitgestellt werden, welche zum Beispiel in Bezug auf die bestimmungsgemäße Einbaulage im Kraftfahrzeug vertikal orientiert sind. Das in einem jeweiligen Zeitschritt durch den Ablenkspiegel reflektierte und auf den Freiformspiegel eingestrahlte Strahlenbündel ist also gewissermaßen in einer Richtung ausgedehnt und umfasst damit nicht nur eine einzelne Einstrahlungsrichtung sondern mehrere, die in einer Ebene liegen. Somit wird also in einem jeweiligen Zeitschritt gewissermaßen eine Einstrahlebene bereitgestellt, die in realen Systemen auch eine gewisse, jedoch sehr geringe Dicke aufweist. Diese in einem jeweiligen Zeitschritt bereitgestellten Einstrahlebenen unterscheiden sich damit in dem beschriebenen dritten Winkel. Wird also beispielsweise zwischen zwei Zeitschritten die Orientierung der Spiegelebene um einen Winkel von 2° geändert, so unterscheiden sich die jeweiligen resultierenden Einstrahlebenen um einen Winkel von 4°, also dem Doppelten.

Bei einer weiteren vorteilhaften Ausgestaltung der Erfindung ist die Sendeeinrichtung derart eingerichtet, dass der Freiformspiegel für einen jeweiligen eingestellten vierten Winkel des Spiegels mit einer Lichtverteilung, insbesondere in einer Schnittebene, zum Beispiel senkrecht zur einen Einstrahlrichtung oder Einstrahlebene, betrachtet, bestrahlt wird, die in einer jeweiligen zweiten Richtung eine maximale Ausdehnung aufweist, die eine Länge definiert, die um ein Vielfaches größer ist als eine Breite der Lichtverteilung senkrecht zur Länge. Zur Bereitstellung einer derartigen Lichtverteilung können entsprechende strahlformende Elemente vorgesehen sein. Beispielsweise kann das durch die Lichtquelle bereitgestellte Strahlenbündel durch eine FAC(Fast Axis Collimation)-Linse in einer Ausdehnungsrichtung auf eine minimale Breite reduziert werden, während das Lichtbündel einer Richtung senkrecht dazu in seiner Ausdehnung nicht oder deutlich geringer reduziert wird. Entsprechend werden dann Strahlenbündel in jeweiligen Zeitschritten über den schwenkbaren Spiegel auf den Freiformspiegel eingestrahlt, welche im Querschnitt jeweilige Längen aufweisen, die deutlich größer, insbesondere um Größenordnungen größer, sind als deren Breiten.

Bedingt durch den fixen dritten Winkel, um welchen der Spiegel gegenüber der Haupteinstrahlrichtung geneigt ist, ergibt es sich jedoch, dass die jeweiligen zweiten Richtungen, die also die Längsausdehnung der jeweiligen Strahlenbündel im Querschnitt in einem jeweiligen Zeitschritt beschreiben, für einen jeweiligen eingestellten zweiten Winkel des Spiegels einen Winkel, nämlich den eingangs erwähnten ersten Winkel, miteinander einschließen, der von Null verschieden ist. Die in jeweiligen Zeitschritten auf den Freiformspiegel eingestrahlten Lichtstreifen sind also nicht parallel zueinander, sondern schließen jeweilige erste Winkel miteinander ein. Die Neigung dieser längsausgedehnten Lichtstreifen mit Bezug auf eine Referenzrichtung, zum Beispiel mit Bezug auf die Ausdehnung des Lichtstreifens, der sich bei einem zweiten Winkel des Spiegels von 0° ergibt, ist dabei umso größer, je größer der aktuelle Ablenkwinkel, das heißt also der zweite Winkel des Spiegels, ist.

Dies beschreibt wiederum den durch den fixen ersten Winkel des Spiegels verursachten Bananen-Effekt, der vorteilhafterweise durch den Freiformspiegel kompensiert werden kann. Entsprechend ist es besonders vorteilhaft, dass der Freiformspiegel dazu ausgebildet ist, die für einen jeweiligen eingestellten zweiten Winkel des Spiegels auf den Freiformspiegel eingestrahlte Lichtverteilung auf eine jeweilige abgestrahlte Lichtverteilung abzubilden, die in einer jeweiligen zweiten Richtung eine maximale Ausdehnung aufweist, die eine Länge definiert, die wiederum um ein Vielfaches größer ist als eine Breite der jeweiligen abgestrahlten Lichtverteilung senkrecht zur Länge, wobei die zweiten Richtungen jeweils zueinander parallel sind. Mit anderen Worten können so die auf den Freiformspiegel in einer zeitlichen Abfolge eingestrahlten und nicht zueinander parallelen Lichtstreifen beziehungsweise Lichtlinien auf zueinander parallele oder zumindest nahezu parallele Lichtstreifen beziehungsweise Lichtlinien oder Scanlinien abgebildet werden. Im Übrigen kann ist der Freiformspiegel bezüglich des Ablenkspiegels so angeordnet, dass oben erwähnte Referenzrichtung, d.h. die Richtung der Ausdehnung des Lichtstreifens, der sich bei einem zweiten Winkel des Spiegels von 0° ergibt, senkrecht zur ersten Richtung, in welche der Freiformspiegel segmentiert ist, verläuft.

Des Weiteren betrifft die Erfindung auch eine optische Erfassungsvorrichtung für ein Kraftfahrzeug, wie beispielsweise einen Laserscanner, wobei die optische Erfassungsvorrichtung eine erfindungsgemäße Sendeeinrichtung oder eine ihrer Ausgestaltungen aufweist. Zusätzlich kann die optische Erfassungsvorrichtung auch noch eine geeignete Empfangseinrichtung zum Detektieren der reflektierten Teile der ausgesendeten Scanstrahlen beziehungsweise Scanlinien aufweisen, die von Objekten reflektiert werden.

Weiterhin betrifft die Erfindung auch ein Kraftfahrzeug mit einer erfindungsgemäßen optischen Erfassungsvorrichtung oder einer ihrer Ausgestaltungsformen.

Die für die erfindungsgemäße Sendeeinrichtung und ihre Ausgestaltungen genannten Merkmale, Merkmalskombinationen und deren Vorteile gelten in gleicher Weise für die erfindungsgemäße optische Erfassungsvorrichtung. Die optische Erfassungsvorrichtung ist vorzugsweise als Laserscanner ausgebildet.

Des Weiteren betrifft die Erfindung auch ein Verfahren zum Herstellen eines Freiformspiegels, insbesondere eines erfindungsgemäßen Freiformspiegels oder eines seiner Ausgestaltungsformen. Gemäß diesem Verfahren wird dabei ein geschmolzener Werkstoff in ein Spritzgusswerkzeug, welches eine Kavität aufweist, eingefüllt.

Dabei weist dabei die Kavität eine erste Seite mit einer ersten vorbestimmten Freiform-Oberfläche, die zur ersten Oberfläche des Freiformspiegels korrespondiert, und eine zweite Seite auf, die zu einer der ersten Oberfläche des Freiformspiegels gegenüberliegenden und eine Rückseite bildenden zweiten Oberfläche korrespondiert, wobei die erste Seite der Kavität zumindest im mit dem Werkstoff befüllten Zustand des Spritzgusswerkzeugs der zweiten Seite der Kavität gegenüberliegt. Weiterhin wird der Werkstoff in den festen Zustand überführt und der anschließend aus dem Spritzgusswerkzeug entnommene feste Werkstoffs auf einer der durch die erste Seite der Kavität gebildeten ersten Oberfläche zumindest innerhalb vorbestimmter Oberflächensegmente, die durch zwei jeweilige Oberflächensegmentgrenzen in und entgegen einer ersten Richtung begrenzt sind, und welche die erste Oberfläche in der ersten Richtung untergliedern, mit einer reflektierenden Beschichtung beschichtet, wobei je zwei benachbart angeordnete Oberflächensegmente an ihren einander zugewandten Oberflächensegmentgrenzen zumindest eine um einen endlichen Wert voneinander verschiedene Orientierung und / oder zumindest einen zueinander ausgebildeten räumlichen Versatz aufweisen, wobei die erste Oberfläche ein zentrales Oberflächensegment und in und entgegen der ersten Richtung in Bezug auf das zentrale Oberflächensegment jeweils mindestens ein erstes Oberflächensegment aufweist.

Durch dieses Verfahren lässt sich der erfindungsgemäße Freiformspiegel und jede seiner Ausgestaltungsformen auf besonders einfache und kostengünstige Weise herstellen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Dabei zeigen:
- Fig. 1: eine schematische Darstellung einer Ausführungsform eines erfindungsgemäßen Kraftfahrzeugs;
- Fig. 2: eine schematische Darstellung eines Freiformspiegels gemäß einem Ausführungsbeispiel der Erfindung;
- Fig. 3: eine schematische Darstellung einer Sendeeinrichtung einer optischen Erfassungsvorrichtung mit einem Freiformspiegel gemäß einem Ausführungsbeispiel der Erfindung;
- Fig.4a: eine schematische Darstellung einer ersten von einem Laserscanner gemäß dem Stand der Technik erzeugten Scan-Lichtverteilung;
- Fig.4b: eine schematische Darstellung einer zweiten von einem Laserscanner erzeugten Scan-Lichtverteilung ohne Kompensation der Strahldivergenz;
- Fig.4c: eine schematische Darstellung einer dritten von einem Laserscanner mit einem Freiformspiegel gemäß einem Ausführungsbeispiel der Erfindung erzeugten Scan-Lichtverteilung; und
- Fig.5: eine schematische Darstellung eines Verfahrens zum Herstellen eines Freiformspiegels gemäß einem Ausführungsbeispiel der Erfindung.

In den Figuren sind gleiche sowie funktionsgleiche Elemente mit den gleichen Bezugszeichen versehen. Auch sind die in den Figuren dargestellten Koordinatensysteme als das gleiche Koordinatensystem anzusehen.

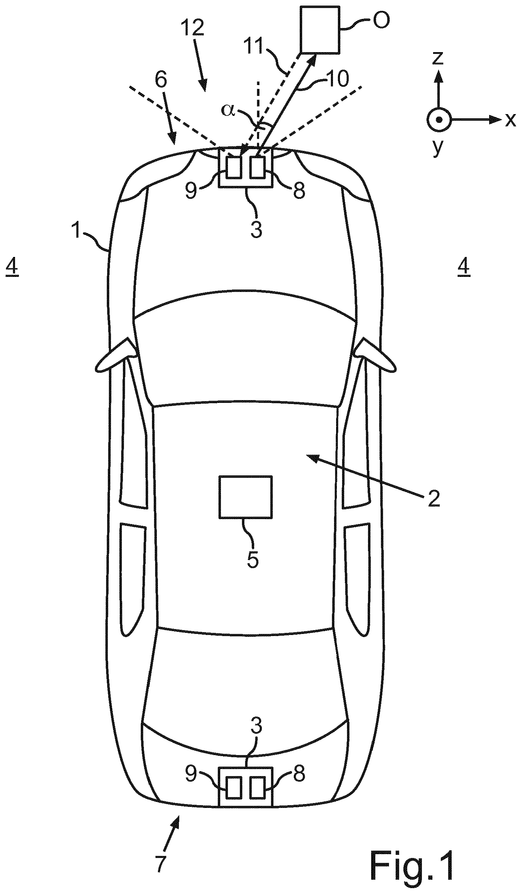

Fig. 1 zeigt ein Kraftfahrzeug 1 gemäß einem Ausführungsbeispiel der Erfindung. Im vorliegenden Fall ist das Kraftfahrzeug 1 als ein Personenkraftwagen ausgebildet. Das Kraftfahrzeug 1 umfasst ein Fahrerassistenzsystem 2, welches dazu ausgelegt ist, einen Fahrer des Kraftfahrzeugs 1 beim Führen des Kraftfahrzeugs 1 zu unterstützen. Das Fahrerassistenzsystem 2 umfasst zumindest eine optische Erfassungsvorrichtung 3, welche dazu ausgelegt ist, einen Umgebungsbereich 4 des Kraftfahrzeugs 1 zu überwachen. Insbesondere können mittels der Erfassungsvorrichtung 3 ein Abstand sowie eine Orientierung eines Objektes O in dem Umgebungsbereich 4 des Kraftfahrzeugs 1 erfasst werden und beispielsweise einer Steuereinrichtung 5 des Fahrerassistenzsystems 2 bereitgestellt werden. Die Steuereinrichtung 5 kann das Kraftfahrzeug 1 zur Kollisionsvermeidung beispielsweise automatisch abbremsen, falls der Abstand des Objektes O einen vorbestimmten Schwellwert unterschreitet. Im vorliegenden Fall weist das Fahrerassistenzsystem 2 zwei Erfassungsvorrichtungen 3 auf, wobei eine erste Erfassungsvorrichtung 3 in einem Frontbereich 6 des Kraftfahrzeugs 1 angeordnet ist und dazu dient, den Umgebungsbereich 4 vor dem Kraftfahrzeug 1 zu überwachen, und eine zweite Erfassungsvorrichtung 3 in einem Heckbereich 7 des Kraftfahrzeugs 1 angeordnet ist und dazu dient, den Umgebungsbereich 4 hinter dem Kraftfahrzeug 1 zu überwachen. Es können auch weitere Erfassungsvorrichtungen 3, beispielsweise in Seitenbereichen des Kraftfahrzeugs 1, vorgesehen sein.

Die optische Erfassungsvorrichtung 3 ist im vorliegenden Fall als ein Laserscanner ausgebildet und weist eine Sendeeinrichtung 8 sowie eine Empfangseinrichtung 9 auf. Die Sendeeinrichtung 8 sendet ein Lichtstrahlenbündel 10 in den Umgebungsbereich 4 aus und die Empfangseinrichtung 9 empfängt einen an dem Objekt O reflektierten Teil 11 des Lichtstrahlenbündels 10. Die Empfangseinrichtung 9 kann anhand einer Laufzeit zwischen dem Aussenden des Lichtstrahlenbündels 10 und dem Empfangen des reflektierten Teils 11 des Lichtstrahlenbündels 10 den Abstand des Objektes O erfassen. Das Lichtstrahlenbündel 10 wird dabei nacheinander beziehungsweise schrittweise entlang verschiedener Abtastwinkel α orientiert. Dadurch wird der Umgebungsbereich 4 mittels des Lichtstrahlenbündels 10 rasterartig abgetastet beziehungsweise gescannt. Gemäß Fig. 1 sind horizontale Komponenten des Abtastwinkels α in einer von einer Fahrzeuglängsrichtung und einer Fahrzeugquerrichtung aufgespannten Horizontalebene gezeigt. Die horizontale Komponente des Abtastwinkels α sowie eine hier nicht gezeigte vertikale Komponente des Abtastwinkels α in einer von der Fahrzeuglängsrichtung und einer Fahrzeughochrichtung aufgespannten Ebene sind der Sendeeinrichtung 8 bekannt, wodurch auch eine Orientierung beziehungsweise Richtung des Objektes O relativ zum Kraftfahrzeug 1 bekannt ist. Ein Winkelbereich 12 in dem Umgebungsbereich 4, welcher mittels des in unterschiedliche Abtastrichtungen orientierten Lichtstrahlenbündels 10 ausgeleuchtet wird, bildet ein Sichtfeld der Sendeeinrichtung 8, zumindest in der hier dargestellten Horizontalen. Hierbei lässt sich beispielsweise in der Horizontalen ein Sichtfeldmit einem Öffnungswinkel beziehungsweise Winkelbereich 12 von 150° bereitstellen. Der Öffnungswinkel des Sichtfelds in der Vertikalen, das heiß in der y-z-Ebene, kann beispielsweise zwischen 20° und 30°, zum Bespiel 26° betragen.

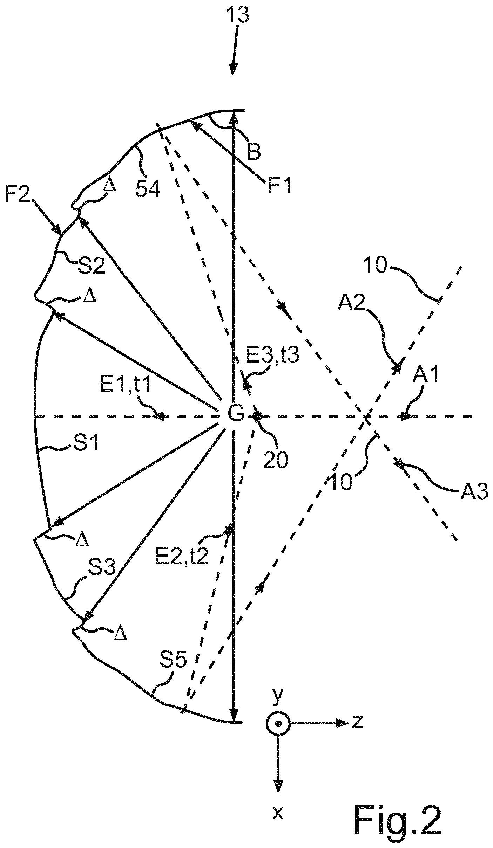

Fig. 2 zeigt nun eine schematische Darstellung eines Freiformspiegels 13 für eine Sendeeinrichtung 8 einer optischen Erfassungsvorrichtung 3 gemäß einem Ausführungsbeispiel der Erfindung. Der Freiformspiegel 13 weist eine erste Oberfläche F1 auf, die zumindest bereichsweise reflektierend und spiegelnd ausgebildet ist. Zu diesem Zweck kann die erste Oberfläche F1 beispielsweise mit einer reflektierenden Beschichtung B ausgebildet sein. Eine zweite Oberfläche F2 bildet eine Rückseite des Freiformspiegels 13 und kann beliebig ausgestaltet sein. Die erste Oberfläche F1 ist nun vorteilhafterweise in einer ersten Richtung, insbesondere der in Fig. 2 dargestellten x-Richtung, in mehrere Oberflächensegmente S1, S2, S3, S4, S5 gegliedert, die durch jeweilige Segmentgrenzen G voneinander getrennt sind. Die Segmentierung ist dabei so ausgestaltet, dass die Reflexionseigenschaften der ersten Oberfläche F1 in ihrem Verlauf über die Segmentgrenzen G hinweg unstetig sind. Mit anderen Worten würde ein auf die erste Oberfläche F 1 eingestrahlter Lichtstrahl, wenn dieser über eine solche Segmentgrenze G hinwegbewegt werden würde, diskontinuierlich an der betreffenden Segmentgrenze G reflektiert werden. Dabei können die jeweiligen Oberflächenbereiche der an eine solche Segmentgrenze G angrenzenden Oberflächensegmente S1, S2, S3, S4, S5 unterschiedlich orientiert sein und/oder sogar einen räumlichen Versatz Δ zueinander aufweisen, wie in diesem Beispiel in Fig. 2 dargestellt. Weiterhin umfasst der Freiformspiegel 13 in diesem Beispiel fünf Segmente S1, S2, S3, S4, S5. Grundsätzlich könnten aber auch beliebig viele Segmente S1, S2, S3, S4, S5 vorgesehen sein, je nach Anwendungsfall. Bevorzugt weist der Freiformspiegel 13 drei oder fünf Segmente S1, S2, S3, S4, S5 auf, wodurch sich ausreichend Flexibilität zur Optimierung der jeweiligen Oberflächensegmente S1, S2, S3, S4, S5 zur Kompensation des Bananen-Effekts und Reduktion der Strahldivergenz bei Reflexion bei gleichzeitig möglichst geringem Fertigungsaufwand bereitstellen lässt. Darüber hinaus ist der Freiformspiegel 13 vorzugsweise achsensymmetrisch bezüglich einer durch das zentrale Oberflächensegment S1, S2, S3, S4, S5 parallel zur hier dargestellten y-Richtung verlaufenden Mittenachse, die insbesondere senkrecht zur ersten Richtung orientiert ist, ausgebildet.

Die reflektierende Beschichtung kann weiterhin entsprechend nur auf den aktiv genutzten Flächen der ersten Oberfläche F1, d.h. zum Beispiel nur auf den entsprechenden Oberflächensegmente S1, S2, S3, S4, S5 zwischen den Segmentgrenzen G, jedoch nicht auf den durch die jeweiligen Versätze Δ entstehenden Todflanken bereitgestellt sein, oder alternativ auf der gesamten ersten Oberfläche F1 inklusive der durch die Versätze Δ bereitgestellten Todflanken, wodurch sich der Fertigungsaufwand beim Beschichten mit der reflektierenden Beschichtung deutlich reduzieren lässt. Die spiegelnde beziehungsweise reflektierende Beschichtung B umfasst vorzugsweise ein metallisches Material oder eine metallische Materialkombination beziehungsweise Legierung. Der Freiformspiegel 13 ist in diesem Beispiel in Fig. 2 schematisch in einer Draufsicht, d.h. in der x-z-Ebene, dargestellt.

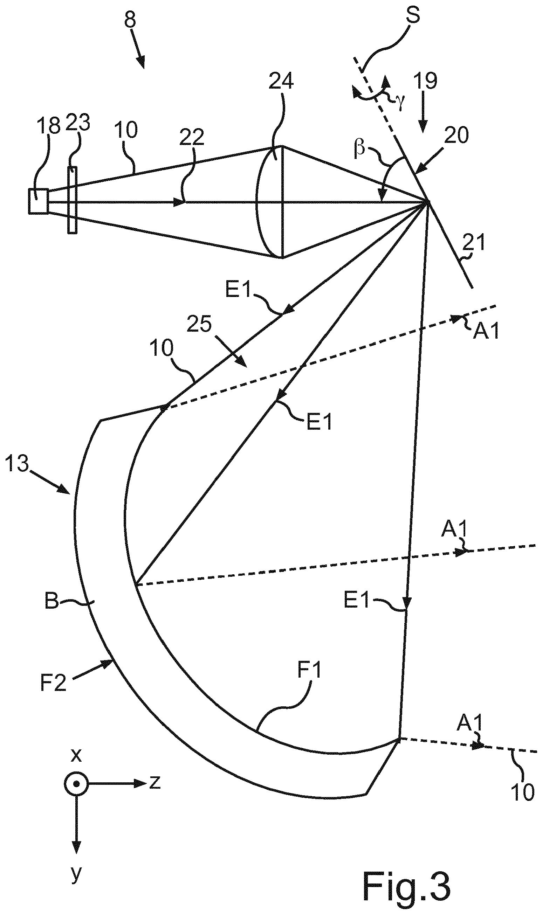

Auf den Freiformspiegel 13 eingestrahlte Lichtstrahlenbündel 10, die auf die erste Oberfläche F1 zeitlich sequenziell eingestrahlt werden, werden zum Großteil, insbesondere fast vollständig, von der reflektierenden Oberfläche F1 reflektiert und wieder abgestrahlt. Die unterschiedlichen Einstrahlrichtungen E1, E2, E3 korrespondieren dabei zu jeweiligen Abstrahlrichtungen A1, A2, A3, in welche die Lichtstrahlenbündel vom Freiformspiegel 13 abgestrahlt werden. Bei der Verwendung des Freiformspiegels 13 in einer optischen Erfassungsvorrichtung 3, wie beispielsweise einem Laserscanner, werden vorzugsweise einzelne Lichtstrahlenbündel 10 in einer zeitlichen Abfolge nacheinander auf den Freiformspiegel 13, insbesondere auf dessen Oberflächensegmente S1, S2, S3, S4, S5 eingestrahlt. In dem in Fig. 2 dargestellten Beispiel wird exemplarisch ein erstes Lichtstrahlenbündel 10 in einer ersten Einstrahlungsrichtung E1 zu einem ersten Zeitpunkt t1 eingestrahlt, ein zweites Lichtstrahlenbündel 10 in einer zweiten Einstrahlungsrichtung E2 zu einem zweiten Zeitpunkt t2 und ein drittes Lichtstrahlenbündel 10 in einer dritten Einstrahlungsrichtung E3 zu einem dritten Zeitpunkt t3. Weiterhin sind aus Gründen der Übersichtlichkeit hierbei lediglich drei verschiedene Einstrahlrichtungen E1, E2, E3 dargestellt, es können jedoch in gleicher Weise auch vielzählige weitere Einstrahlrichtungen und korrespondierende Abstrahlrichtungen durch eine Sendeeinrichtung 8 bereitgestellt werden. Im Allgemeinen kann ein solches Lichtstrahlenbündel 10 also in deutlich mehr, insbesondere vielzähligen, Einstrahlrichtungen als die dargestellten auf die jeweiligen Oberflächensegmente S1, S2, S3, S4, S5 eingestrahlt werden. Die Orientierung des einzustrahlen den Lichtbündels 10 in die unterschiedlichen Einstrahlrichtungen kann durch einen geeigneten und beweglichen Ablenkspiegel 20 (vergleiche auch Fig. 3), der hier nur schematisch als Punkt dargestellt ist, bewerkstelligt werden. Dabei erfolgt die Einstrahlung des gepulsten Lichtstrahlenbündels 10 in den unterschiedlichen Einstrahlrichtungen derart, dass diese nicht in den die Segmentgrenzen G umfassenden Grenzbereich zwischen den einzelnen Oberflächensegmente S1, S2, S3, S4, S5 eingestrahlt werden, um unerwünschte Steuereffekte zu vermeiden.

Der Freiformspiegel 13 ist nun vorteilhafterweise dazu ausgebildet, eine auf die erste Oberfläche F1 zeitlich sequenziell eingestrahlte Lichtverteilung auf eine abgestrahlte Lichtverteilung abzubilden, welche in vorbestimmter Weise geformt beziehungsweise entzerrt wird. Weißt also beispielsweise eine eingestrahlte Lichtverteilung unerwünschte Verzerrungseffekte auf, so können diese unerwünschten Effekte vorteilhafterweise durch den Freiformspiegel 13 kompensiert werden. Um eine derartige Entzerrung bereitzustellen, müssen unweigerlich gekrümmte Oberflächenbereiche oder unterschiedlich zueinander geneigte Oberflächenbereiche vorgesehen werden, die wiederum zu einer erhöhten Divergenz der reflektierten Lichtbündel führen. Durch die Segmentierung der Oberfläche F1 können die einzelnen Bereiche deutlich einfacher optimiert werden. Dies hat zum einen zur Folge, dass die jeweiligen Freiform-Oberflächen der betreffenden Oberflächensegmente S1, S2, S3, S4, S5 im Mittel deutlich weniger stark gekrümmt sind als dies bei der Verwendung eines Freiformspiegels ohne Segmentierung der Fall wäre, wodurch sich im Gegensatz zu herkömmlichen Freiformspiegel eine deutliche Reduktion der Strahldivergenz erreichen lässt. Zudem können auch noch deutlich bessere oder andere Prioritäten bezüglich der Optimierung für die jeweiligen Oberflächensegmente S1, S2, S3, S4, S5, die zu entsprechenden Sichtfeldbereichen korrespondieren, gesetzt werden. Beispielsweise ist ein gutes Auflösungsvermögen gerade im zentralen Sichtfeldbereich, der zum zentralen Oberflächensegment S1 korrespondiert, besonders vorteilhaft. Gleichzeitig ist der Bananen-Effekt, der nachfolgend näher beschrieben wird, gerade in diesem zentralen Oberflächensegment S1 am wenigsten stark ausgeprägt. Entsprechend ist es vorteilhafterweise möglich, dieses zentrale Oberflächensegment S1 eben oder zumindest mit einer geringen mittleren Krümmung auszubilden, die insbesondere deutlich geringer erst als die mittlere Krümmung der übrigen Oberflächensegmente S2, S3, S4, S5, sodass auch die Divergenz des in diesem Bereich reflektierten Strahlenbündels minimiert werden kann. Die äußeren Oberflächensegmente S2, S3, S4, S5 dagegen können in Bezug auf die Kompensation des Bananen-Effekts hin optimiert werden. Dadurch lässt sich insgesamt ein besonders großes Sichtfeld mit kompensiertem Bananen-Effekt und gleichzeitig besonders hohem Auflösungsvermögen im zentralen Sichtfeldbereich bereitstellen.

Fig. 3 zeigt eine schematische Darstellung einer Sendeeinrichtung 8 für eine optische Erfassungsvorrichtung 3 gemäß einem Ausführungsbeispiel der Erfindung. Die Sendeeinrichtung weist eine Lichtquelle 18 zum Bereitstellen eines Lichtstrahlenbündels 10 auf. Die Lichtquelle 18 kann dabei eine oder mehrere Laserdioden oder andersartige Lichtquellen aufweisen, und zum Beispiel als ein Laserdioden-Array ausgeführt sein. Weiterhin kann die Lichtquelle 18 gepulst betrieben werden, sodass in einem jeweiligen Zeitschritt t1, t2, t3 ein Lichtpuls in Form eines Strahlenbündels 10 bereitgestellt wird. Die Lichtquelle 18 ist vorzugsweise zur Aussendung monochromatischer Lichtbündel 10 ausgebildet. Die Wellenlänge dieser monochromatischen Lichtbündel kann in jedem beliebigen Wellenlängenbereich liegen, zum Beispiel im sichtbaren Wellenlängenbereich und/oder im Infrarotbereich und/oder ultravioletten Bereich. Beispielsweise kann die Lichtquelle 18 zur Aussendung von Licht mit einer Wellenlänge von 905 nm ausgelegt sein.

Weiterhin weist die Sendeeinrichtung 8 eine Ablenkeinrichtung 19 auf, welche einen Spiegel 20 umfasst. Der Spiegel 20 stellt vorzugsweise einen MEMS-Spiegel dar. Weiterhin weist der Spiegel 20 vorzugsweise eine ebene Spiegelfläche 21 auf. Mittels des Spiegels 20 kann das eingestrahlte Strahlenbündel 10 in verschiedene Richtungen E1, E2, E3 abgelenkt werden. Um ein möglichst großes Sichtfeld bereitstellen zu können, ist der Spiegel 20 beziehungsweise dessen ebene Spiegelfläche 21 um einen fixen Winkel β gegenüber der Haupteinstrahlrichtung 22 des eingestrahlten Lichtstrahlenbündels 10 geneigt. In diesem Beispiel ist der Spiegel 20 dabei um eine parallel zur x-Achse des eingezeichneten Koordinatensystems verlaufende Achse, gedreht.

Zur Bereitstellung der unterschiedlichen Einstrahlrichtungen E1, E2, E3 zur Einstrahlung der Strahlenbündel 10 auf den Freiformspiegel 13 ist der Spiegel 20 weiterhin um eine zweite Schwenkachse S, die in diesem Beispiel senkrecht zur x-Achse verläuft und in der Spiegelebene liegt, um verschiedene vorbestimmte Winkel γ schwenkbar. Jeder zu einem jeweiligen Zeitschritt t1, t2, t3 eingestellte aktuelle Winkel γ stellt damit eine vorbestimmte Einstrahlungsrichtung E1, E2, E3 bereit, unter welcher das Lichtstrahlenbündel 10 auf den Freiformspiegel 13 abgelenkt wird.

Weiterhin ist der Freiformspiegel 13 vorzugsweise derart relativ zum Ablenkspiegel 20 angeordnet, dass in der Nullstellung des Ablenkspiegels 20, in welcher die Neigungsachse des Ablenkspielgels 20, welche parallel zur x-Achse des eingezeichneten Koordinatensystems verläuft, senkrecht zur Haupteinstrahlrichtung 22 ausgerichtet ist, das Strahlenbündel 10 auf das zentrale Oberflächensegment S1 des Freiformspiegels eingestrahlt wird, sowie insbesondere auch für Schwenkwinkel γ, die kleiner sind als ein vorbestimmter Grenzwert in Bezug auf eine Nullstellung des Ablenkspiegels 20. Bei gegebener Anordnung, wie zum Beispiel die oben beschriebene, sind die Schwenkwinkel γ für die gegebenen Zeitschritte t1, t2, t3 derart bemessen, dass keine Einstrahlung des Lichtbündels 10 auf die zwischen den einzelnen Oberflächensegmenten S1, S2, S3, S4, S5 befindlichen und die Segmentgrenzen G umfassenden Grenzbereiche trifft. So kann vorteilhafterweise durch geeignete Abstimmung der Pulsfrequenz, Pulsdauer und der Stellung des Ablenkspiegels 20 relativ zum Freiformspiegel 13 während der Aussendung eines Lichtpulses 10 bewerkstelligt werden, dass der Freiformspiegel 13 nicht in den unstetigen Grenzbereichen beleuchtet wird, sondern lediglich in den dazwischen befindlichen Oberflächensegmentbereichen S1, S2, S3, S4, S5, sodass eine unerwünschte Streuung des Lichtstrahls 10 in den Grenzbereichen vermieden wird.

Weiterhin ist es bevorzugt, um mittels dieser Sendeeinrichtung 8 die Umgebung 4 abzutasten, nicht einzelne Scanpunkte sondern vielmehr Scanlinien auszusenden, die in Bezug auf die bestimmungsgemäße Einbaulage der optischen Erfassungsvorrichtung 3 am Kraftfahrzeug 1 vorzugsweise alle in vertikaler Richtung verlaufen. Zur Bereitstellung solcher Scanlinien kann das Lichtstrahlenbündel 10 in eine Richtung aufgeweitet werden beziehungsweise in einer Richtung senkrecht dazu verschmälert. Hierzu kann beispielsweise im Strahlengang zwischen der Lichtquelle 18 und der Ablenkeinheit beziehungsweise Ablenkeinrichtung 19 eine FAC-Linse 23 angeordnet sein, welche die Strahlbreite des ausgesandten Lichtbündels 10 in einer Richtung, in diesem Fall die x-Richtung, verschmälert. Weiterhin kann im Strahlengang auch eine Kollimator-Linse 24 der FAC-Linse 23 nachgeschaltet sein, um das Lichtbündel 10 zu kollimieren, insbesondere wiederum vorzugsweise nur in x-Richtung, und das Strahlenbündel in der y-z-Ebene auf den Spiegel 20 zu fokussieren. Hieraus ergibt sich ein Strahlenbündel 10, welches sich nach Reflexion am Spiegel 20 über einen Einstrahlbereich 25 erstreckt. Diese in diesem Einstrahlbereich 25 in der ersten Richtung E1 verlaufenden Lichtstrahlen liegen dabei alle in einer Ebene. In diesem Beispiel ist das Lichtstrahlenbündel 10 in einer Nullstellung des Spiegels 20, d.h. für γ gleich 0°, dargestellt. In Fig. 3 ist also eine Seitenansicht des Lichtstrahlenbündels 10 in der ersten Einstrahlungsrichtung E1 dargestellt, welches in Fig. 2 in einer Draufsicht zu sehen ist. Für unterschiedliche Ablenkwinkel γ entstehen also in einer zeitlichen Abfolge sich ausweitende Einstrahlbereiche 25, die sich jeweils in einem Winkel unterscheiden.

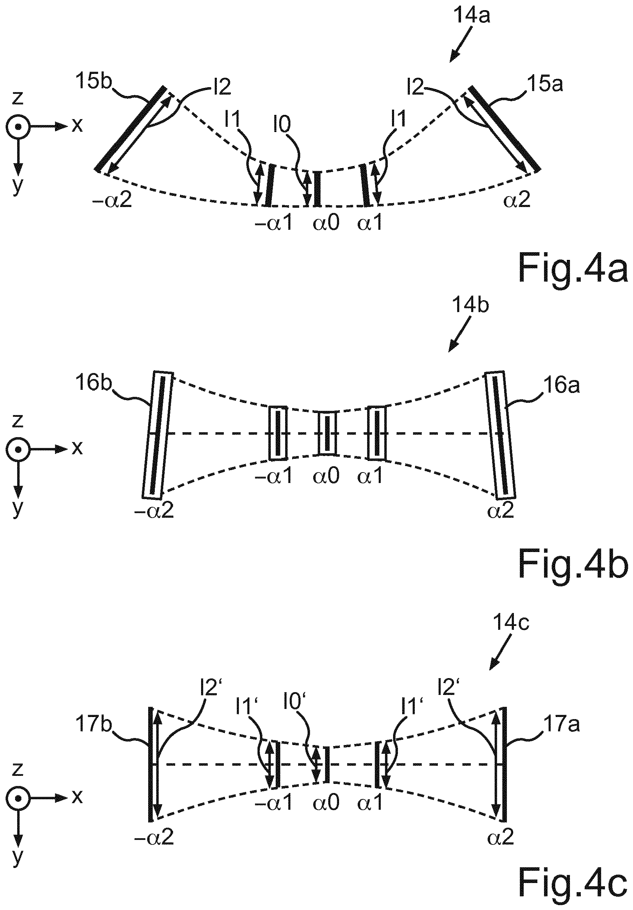

Durch dieses in Fig. 3 in der dargestellten y-Richtung aufgeweitete Strahlenbündel 10 lässt sich eine Scanlinie bereitstellen, welche in y-Richtung, also zum Beispiel in der Vertikalen, einen Öffnungswinkel von beispielsweise 26° aufweist, während der Öffnungswinkel senkrecht dazu, d.h. in der hier dargestellten x-Richtung eines solchen abgestrahlten Lichtstrahlenbündels 10 lediglich zum Beispiel 0,1° für den zentralen Sichtfeldbereich bemisst. Ein derart kleiner Öffnungswinkel in x-Richtung, lässt sich jedoch erst durch den Freiformspiegel 13 erreichen, was noch anhand von Fig. 4a bis Fig.4c näher erläutert werden soll.

Fig. 4a zeigt eine schematische Darstellung einer ersten Lichtverteilung 14a wie sie durch eine Sendeeinrichtung gemäß dem Stand der Technik ausgesandt werden würde ohne den Freiformspiegel 13. Die angegebenen Winkel α0, α1 und α2 bezeichnen hierbei die Ablenkwinkel, in welcher das von einer Sendeeinrichtung ausgesandte Lichtstrahlenbündel ausgesandt wird. Insbesondere würde eine derartige Lichtverteilung 14a über mehrere Zeitschritte t1, t2, t3 betrachtet in einer Schnittebene, zum Beispiel senkrecht zur Abstrahlrichtung bei einem Abstrahlwinkel α von 0°, der hier mit α0 bezeichnet ist, entstehen, mit einer Anordnung gemäß Fig. 3 ohne den Freiformspiegel 13, sondern zum Beispiel stattdessen mit lediglich einem ebenen Umlenkspiegel. Das Sichtfeld erstreckt sich entsprechend über einen Winkelbereich von -α2 bis +α2 bezogen auf die x-z- Ebene, beispielsweise der Horizontalen. α1 ist beispielsweise 30° und α2 beispielsweise 75°. Durch den fixen Winkel β, den der Spiegel 20 gegenüber der Haupteinstrahlrichtung 22 des eingestrahlten Lichtstrahlenbündels 10 aufweist, ergibt sich ohne den Freiformspiegel 13 eine abgestrahlte Lichtverteilung 14a, gemäß welcher die einzelnen Scanlinien eine jeweilige Länge l0, l1, l2 in einer jeweiligen Richtung aufweisen, die nicht parallel zueinander verlaufen, sondern mehr oder weniger gegenüber der Vertikalen geneigt sind. Je größer dabei der Ablenkwinkel α ist, desto stärker sind die Scanlinien in ihrer entsprechenden Längsausdehnung gegenüber der Vertikalen beziehungsweise der hier dargestellten y-Richtung geneigt. Exemplarisch sind hier lediglich die das Sichtfeld begrenzende Scanlinien 15a und 15b mit einem Bezugszeichen versehen. Entsprechend wird also das Sichtfeld zumindest in einer Richtung, hier der x-Richtung, durch zwei nicht parallel zueinander verlaufende Geraden begrenzt. Diese Verzerrung beziehungsweise Deformation des Sichtfelds führt zu einer effektiven Reduktion des tatsächlich nutzbaren Sichtfelds einer optischen Erfassungsvorrichtung, und ist daher unerwünscht. Durch den Freiformspiegel 13 lässt sich vorteilhafterweise eine Entzerrung dieses Sichtfeld bewerkstelligen.

Diese in Fig. 4a dargestellte Lichtverteilung korrespondiert in seiner Formgebung dabei ebenso zu der gemäß der Sendeeinrichtung aus Fig. 3 vom Spiegel 20 auf den Freiformspiegel 13 in aufeinanderfolgenden Zeitschritten eingestrahlten Lichtverteilung, die nun durch den Freiformspiegel 13 vorteilhafterweise entzerrt und somit dieser Bananen-Effekt kompensiert werden kann.

Fig. 4b zeigt eine schematische Darstellung eines Sichtfelds 14b, wie dieses sich ergeben würde, wenn anstelle des Freiformspiegels 13 gemäß einem Ausführungsbeispiel der Erfindung, wie in Fig. 3 dargestellt, sich lediglich ein herkömmlicher nicht segmentierter Freiformspiegel befinden würde. Die das Sichtfeld begrenzende Scanlinien 16a, 16b verlaufen hierbei als nahezu zueinander parallele Geraden, und insbesondere auch nahezu parallel zu allen übrigen dazwischen befindlichen Scanlinien. Allerdings kann lässt sich gerade bei großen Abstrahlwinkel keine vollständige Kompensation des Bananen-Effekts durch einen herkömmlichen Freiformspiegel erreichen. Insbesondere bleib eine Neigung von ca. 1° bei einem Abstrahlwinkel α von 35°. Die Entzerrung des Sichtfeldes durch lediglich einen herkömmlichen Freiformspiegel bewirkt zudem nachteiligerweise eine deutliche Divergenz der jeweiligen Strahlenbündel, die sich vor allem in einer deutlichen Verbreiterung der jeweiligen Scanlinien in x-Richtung bemerkbar macht.

Durch den erfindungsgemäßen Freiformspiegel 13 und seinen Ausführungsformen lässt es sich nun vorteilhafterweise bewerkstelligen, dass sowohl der in Fig. 4a dargestellte Bananen-Effekt vollständig kompensiert wird, insbesondere auch bei großen Abstrahlwinkeln α, sowie eine Divergenz der einzelnen Strahlenbündel 10 im Allgemeinen reduziert wird, vor allem aber hauptsächlich im zentralen Sichtfeldbereich, das heißt bei kleinen Abstrahlwinkeln α. Dies ist in Fig. 4c dargestellt. Insbesondere zeigt Fig. 4c dabei eine schematische Darstellung einer dritten Lichtverteilung 14c, wie sie sich zum Beispiel durch eine Ausführungsform der Sendeeinrichtung 8, wie in Fig. 3 dargestellt, ergibt. Die jeweiligen Scanlinien verlaufen nun mit Bezug auf ihre jeweiligen Längen l0', l1', l2' parallel zueinander, mit deutlich verringerter Breite senkrecht zu ihren Längen l0', l1', l2', insbesondere im Gegensatz zur Lichtverteilung 14b aus Fig. 4b. Insbesondere kann so im Zentrum des Sichtfelds bei α=0° eine maximale Strahldivergenz von 0,1° und am Rand des zentralen Sichtfelds bei α=±35° eine maximale Strahldivergenz von 0,7° ermöglicht bei gleichzeitiger vollständiger Kompensation des Bananen-Effekts. Das Sichtfeld wird in x-Richtung durch zwei parallele Scanlinien 17a, 17b begrenzt, die durch parallel zueinander verlaufende Geraden beschrieben werden können.

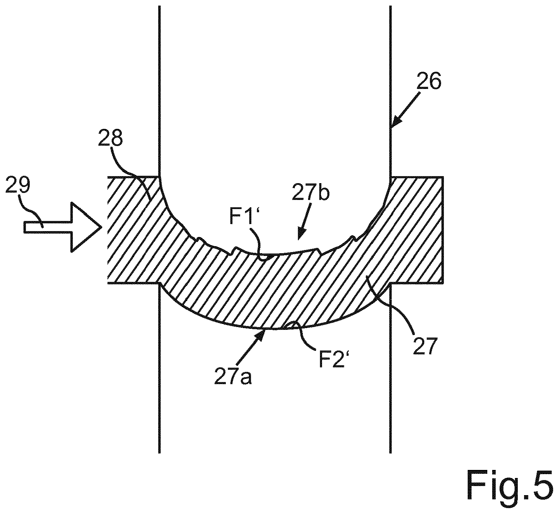

Fig. 5 zeigt eine schematische Darstellung zur Veranschaulichung eines Spritzgussverfahrens zum Herstellen eines Freiformspiegels 13. Hierbei wird ein Spritzgusswerkzeug 26 bereitgestellt, welches eine Kavität 27 aufweist. Diese Kavität 27 weist wiederum eine erste Seite 27b mit einer ersten vorbestimmten Freiform-Oberfläche F1', die zur ersten Oberfläche F1 des Freiformspiegels 13 korrespondiert, auf und eine zweite Seite 27b mit einer zweiten beliebig geformten Oberfläche F2' auf, die zu einer der ersten Oberfläche F1 gegenüberliegenden und eine Rückseite des Freiformspiegels 13 bildenden zweiten Oberfläche F2 korrespondiert. Zur Herstellung des Freiformspiegels 13 wird nun ein Werkstoff 28 in geschmolzener Form in die Kavität 27 des Spritzgusswerkzeugs 26 eingefüllt, was durch den Pfeil 29 veranschaulicht ist. Anschließend wird der Werkstoff 27 in den festen Zustand überführt. Ein derartiges Überführen kann beispielsweise durch Aushärten oder Abkühlen des Werkstoffs 27 bewerkstelligt werden. Nach Entnahme des festen Werkstoffs 27 aus dem Spritzgusswerkzeug 26 wird die erste Seite 27b, die mit der ersten Freiform-Oberfläche F1' der Kavität 27 ausgebildet wurde, mit einer reflektierenden beziehungsweise spiegelnden Beschichtung B beschichtet, um die spiegelnde erste Oberfläche F1 des Freiformspiegels 13 bereitzustellen.

## Patentansprüche

1. Freiformspiegel (13) für eine Sendeeinrichtung (8) einer optischen Erfassungsvorrichtung (3), wobei der Freiformspiegel (13) eine erste Seite mit einer zumindest bereichsweise reflektierenden ersten Oberfläche (F1) aufweist, die mit einer reflektierenden Beschichtung (B) ausgebildet ist,
wobei die erste Oberfläche (F1) in einer ersten Richtung (x) in mehrere reflektierende Oberflächensegmente (S1, S2, S3, S4, S5) gegliedert ist, wobei ein jeweiliges Oberflächensegment (S1, S2, S3, S4, S5) zwei Oberflächensegmentgrenzen (G) aufweist, die das zugeordnete Oberflächensegment (S1, S2, S3, S4, S5) in und entgegen der ersten Richtung (x) begrenzen, **dadurch gekennzeichnet, dass** die erste Oberfläche (F1) so ausgebildet ist, dass je zwei benachbart angeordnete Oberflächensegmente (S1, S2, S3, S4, S5) an ihren einander zugewandten Oberflächensegmentgrenzen (G) zumindest eine um einen endlichen Wert voneinander verschiedene Orientierung und/oder zumindest einen zueinander ausgebildeten räumlichen Versatz (Δ) aufweisen, sodass eine Reflexionseigenschaft der ersten Oberfläche (F1) in ihrem Verlauf über die Oberflächensegmentgrenzen (G) hinweg unstetig ist, dass die erste Oberfläche (F1) ein zentrales Oberflächensegment (S1) und in und entgegen der ersten Richtung in Bezug auf das zentrale Oberflächensegment (S1) jeweils mindestens ein erstes Oberflächensegment (S1, S2, S3, S4, S5) aufweist.

2. Freiformspiegel (13) nach Anspruch 1,
**dadurch gekennzeichnet, dass**
die erste Oberfläche (F1) im Bereich zumindest eines der ersten Oberflächensegmente (S1, S2, S3, S4, S5) dazu ausgebildet ist, eine auf das erste Oberflächensegment (S1, S2, S3, S4, S5) in zumindest einer Einstrahlrichtung (E1, E2, E3) eingestrahlte erste Lichtverteilung (14a), welche in ihrer Gesamtheit in einer ersten Ebene senkrecht zur zumindest einen Einstrahlrichtung (E1, E2, E3) auf das erste Oberflächensegment (S2, S3, S4, S5) eingestrahlt wird und durch ein oder mehrere von einer Lichtquelle der Sendeeeinrichtung bereitgestellten Strahlenbündel bereitgestellt wird, durch zwei nicht parallele erste Geraden welche einen ersten Winkel zueinander aufweisen begrenzt ist, auf eine einen Teil eines Sichtfelds der Sendeeinrichtung (10) bereitstellende Lichtverteilung (14c) abzubilden, welche in einer zweiten Ebene senkrecht zu zumindest einer bestimmten Abstrahlrichtung (A1, A2, A3) durch zwei zweite Geraden (17a, 17b) begrenzt ist, die einen zweiten Winkel zueinander aufweisen, der kleiner ist als der erste Winkel.

3. Freiformspiegel (13) nach einem der Ansprüche 1 oder 2,
**dadurch gekennzeichnet, dass**
die erste Oberfläche (F1) derart ausgebildet ist, dass eine Vergrößerung einer Divergenz eines auf die erste Oberfläche (F1) im zentralen Oberflächensegment (S1) eingestrahlten Lichtbündels (10) bei dessen Reflexion geringer ist als eine Vergrößerung einer Divergenz eines auf das erste Oberflächensegment (S2, S3, S4, S5) eingestrahlten Lichtbündels (10) bei dessen Reflexion.

4. Freiformspiegel (13) nach einem der Ansprüche 1 bis 3,
**dadurch gekennzeichnet, dass**
das zentrale Oberflächensegment (S1) eine mittlere Krümmung aufweist, die geringer ist als eine mittlere Krümmung der jeweiligen zumindest einen ersten Oberflächensegmente (S2, S3, S4, S5).

5. Freiformspiegel (13) nach einem der Ansprüche 1 bis 4,
**dadurch gekennzeichnet, dass**
das zentrale Oberflächensegment (S1) eben ist.

6. Freiformspiegel (13) nach einem der vorhergehenden Ansprüche,
**dadurch gekennzeichnet, dass**
der Freiformspiegel (13) ohne Hinterschneidung ausgebildet ist.

7. Verfahren zum Herstellen eines Freiformspiegels (13) nach einem der Ansprüche 1 bis 6 mit den Schritten:
- Einfüllen (29) eines geschmolzenen Werkstoffs (28) in ein Spritzgusswerkzeug (26), welches eine Kavität (27) aufweist, die eine erste Seite (27b) mit einer ersten vorbestimmten Freiform-Oberfläche (F1'), die zur ersten Oberfläche (F1) des Freiformspiegels (13) korrespondiert und eine zweite Seite (27a) aufweist, die zu einer der ersten Oberfläche (F1) gegenüberliegenden und eine Rückseite bildenden zweiten Oberfläche (F2) korrespondiert, wobei die erste Seite (27b) der Kavität (27) zumindest im mit dem Werkstoff (28) befüllten Zustand des Spritzgusswerkzeugs (26) der zweiten Seite (27a) der Kavität (27) gegenüberliegt;
- Überführen des Werkstoffs (28) in den festen Zustand; und
- Beschichten des aus dem Spritzgusswerkzeug (26) entnommenen Werkstoffs (28) auf einer der durch die erste Seite (27b) der Kavität (27) gebildeten ersten Oberfläche (F1) zumindest innerhalb vorbestimmter Oberflächensegmente (S1, S2, S3, S4, S5), die durch zwei jeweilige Oberflächensegmentgrenzen (G) in und entgegen einer ersten Richtung (x) begrenzt sind, und welche die erste Oberfläche (F1) in der ersten Richtung untergliedern, mit einer reflektierenden Beschichtung (B), wobei je zwei benachbart angeordnete Oberflächensegmente (S1, S2, S3, S4, S5) an ihren einander zugewandten Oberflächensegmentgrenzen (G) zumindest eine um einen endlichen Wert voneinander verschiedene Orientierung und / oder zumindest einen zueinander ausgebildeten räumlichen Versatz (Δ) aufweisen, wobei die erste Oberfläche (F1) ein zentrales Oberflächensegment (S1) und in und entgegen der ersten Richtung in Bezug auf das zentrale Oberflächensegment (S1) jeweils mindestens ein erstes Oberflächensegment (S1, S2, S3, S4, S5) aufweist.

## Claims

1. Free-form mirror (13) for a transmission device (8) of an optical capture apparatus (3), wherein the free-form mirror (13) comprises a first side with a first surface (F1) which is at least regionally reflective and is provided with a reflective coating (B),
wherein the first surface (F1) is divided in a first direction (x) into a plurality of reflective surface segments (S1, S2, S3, S4, S5), wherein a respective surface segment (S1, S2, S3, S4, S5) has two surface segment boundaries (G) which bound the assigned surface segment (S1, S2, S3, S4, S5) in and counter to the first direction (x), **characterized in that** the first surface (F1) is designed such that in each case two adjacent surface segments (S1, S2, S3, S4, S5) have at their mutually facing surface segment boundaries (G) at least one orientation, the latter respectively differing by a finite value, and/or at least one spatial offset (Δ) relative to one another, with the result that a reflection property of the first surface (F1) is unsteady in its profile across the surface segment boundaries (G), **in that** the first surface (F1) has a central surface segment (S1) and has in and counter to the first direction with respect to the central surface segment (S1) in each case at least one first surface segment (S1, S2, S3, S4, S5) .

2. Free-form mirror (13) according to Claim 1, **characterized in that**
the first surface (F1) is designed in the region of at least one of the first surface segments (S1, S2, S3, S4, S5) to map a first light distribution (14a), which is radiated onto the first surface segment (S1, S2, S3, S4, S5) in at least one radiation direction (E1, E2, E3) and is radiated in its totality in a first plane perpendicular to the at least one radiation direction (E1, E2, E3) onto the first surface segment (S2, S3, S4, S5) and is provided by one or more beams provided by a light source of the transmission device, bounded by two non-parallel first straight lines enclosing a first angle between them, onto a light distribution (14c) which provides a portion of a field of view of the transmission device (10) and is bounded in a second plane perpendicular to at least one determined emission direction (A1, A2, A3) by two second straight lines (17a, 17b) enclosing a second angle between them which is smaller than the first angle.

3. Free-form mirror (13) according to either of Claims 1 and 2,
**characterized in that**
the first surface (F1) is designed such that an enlargement of a divergence of a beam (10) radiated onto the first surface (F1) in the central surface segment (S1) upon the reflection of the latter is smaller than an enlargement of a divergence of a beam (10) radiated onto the first surface segment (S2, S3, S4, S5) upon the reflection of the latter.

4. Free-form mirror (13) according to any of Claims 1 to 3,
**characterized in that**
the central surface segment (S1) has a middle curvature which is smaller than a middle curvature of the respective at least one first surface segment (S2, S3, S4, S5) .

5. Free-form mirror (13) according to any of Claims 1 to 4,
**characterized in that**
the central surface segment (S1) is planar.

6. Free-form mirror (13) according to any of the preceding claims,
**characterized in that**
the free-form mirror (13) is designed without an undercut.

7. Method of producing a free-form mirror (13) according to any of Claims 1 to 6, having the steps of:
- filling (29) a molten material (28) into an injection mould (26) which has a cavity (27) that has a first side (27b) with a first predetermined free-form surface (F1') corresponding to the first surface (F1) of the free-form mirror (13) and has a second side (27a) which corresponds to a second surface (F2) that lies opposite the first surface (F1) and forms a rear side, wherein the first side (27b) of the cavity (27) lies opposite the second side (27a) of the cavity (27) at least in the state of the injection mould (26) in which it is filled with the material (28);
- transitioning the material (28) into the solid state; and
- coating the material (28) removed from the injection mould (26) on a first surface (F1), formed by the first side (27b) of the cavity (27), at least within predetermined surface segments (S1, S2, S3, S4, S5) which are bounded by two respective surface segment boundaries (G) in and counter to a first direction (x) and which divide the first surface (F1) in the first direction, with a reflective coating (B), wherein in each case two adjacent surface segments (S1, S2, S3, S4, S5) have at their mutually facing surface segment boundaries (G) at least one orientation, the latter respectively differing by a finite value, and/or at least one spatial offset (Δ) relative to one another, wherein the first surface (F1) has a central surface segment (S1) and has in and counter to the first direction with respect to the central surface segment (S1) in each case at least one first surface segment (S1, S2, S3, S4, S5).

## Revendications

1. Miroir de forme libre (13) pour un équipement d'émission (8) d'un dispositif de détection (3), dans lequel le miroir de forme libre (13) présente une première face pourvue d'une première surface (F1) réfléchissante au moins par endroits, qui est réalisée avec un revêtement réfléchissant (B),
dans lequel la première surface (F1) est dans une première direction (x) divisée en plusieurs segments de surface réfléchissants (S1, S2, S3, S4, S5), dans lequel un segment de surface (S1, S2, S3, S4, S5) respectif présente deux limites de segment de surface (G) qui délimitent le segment de surface (S1, S2, S3, S4, S5) associé dans la première direction (x) et dans la direction opposée, **caractérisé en ce que** la première surface (F1) est réalisée de telle sorte que respectivement deux segments de surface (S1, S2, S3, S4, S5) adjacents présentent au niveau de leurs limites de segment de surface (G) tournées les unes vers les autres des orientations différentes les unes des autres d'une valeur finie, et/ou présentent au moins un décalage spatial (Δ) réalisé entre elles, de sorte qu'une propriété de réflexion de la première surface (F1) est discontinue dans son tracé au-delà des limites de segment de surface (G), **en ce que** la première surface (F1) présente un segment de surface central (S1) dans la première direction et dans la direction opposée par rapport au segment de surface central (S1) d'au moins respectivement un premier segment de surface central (S1, S2, S3, S4, S5).

2. Miroir de forme libre (13) selon la revendication 1,
caractérisé en ce
la première surface (F1) est réalisée au niveau d'au moins l'un des premiers segments de surface (S1, S2, S3, S4, S5) pour mapper une première distribution de lumière (14a) rayonnée sur le premier segment de surface (S1, S2, S3, S4, S5) dans au moins une direction de rayonnement (E1, E2, E3), qui est rayonnée en totalité dans un premier plan perpendiculairement à au moins une direction de rayonnement (E1, E2, E3) sur le premier segment de surface (S2, S3, S4, S5) et est fournie par un ou plusieurs faisceaux fournis par une source de lumière de l'équipement d'émission, est délimitée par deux premières droites non parallèles qui présentent un premier angle l'une par rapport à l'autre, sur une deuxième distribution de lumière (14c) fournissant une partie du champ de vision de l'équipement d'émission (10), qui est délimitée dans un deuxième plan perpendiculairement à au moins une direction de rayonnement (A1, A2, A3) déterminée par deux deuxièmes droites (17a, 17b) qui présentent un deuxième angle l'une par rapport à l'autre qui est inférieur au premier angle.

3. Miroir de forme libre (13) selon l'une quelconque des revendications 1 ou 2,
caractérisé en ce
la première surface (F1) est réalisée de telle sorte qu'une augmentation d'une divergence d'un faisceau de lumière (10) rayonné sur la première surface (F1) dans le segment de surface central (S1) est inférieure lorsque celui-ci est réfléchi à une augmentation d'une divergence d'un faisceau de lumière (10) rayonné sur le premier segment de surface (S2, S3, S4, S5) lorsque celui-ci est réfléchi.

4. Miroir de forme libre (13) selon l'une quelconque des revendications 1 à 3,
caractérisé en ce
le segment de surface central (S1) présente une courbure moyenne qui est inférieure à une courbure moyenne dudit au moins un premier segment de surface (S2, S3, S4, S5) respectif.

5. Miroir de forme libre (13) selon l'une quelconque des revendications 1 à 4,
caractérisé en ce
le segment de surface central (S1) est plan.

6. Miroir de forme libre (13) selon l'une quelconque des revendications précédentes,
caractérisé en ce
le miroir de forme libre (13) est réalisé sans contre-dépouille.

7. Procédé permettant de fabriquer un miroir de forme libre (13) selon l'une quelconque des revendications 1 à 6, comprenant les étapes consistant à :
- verser (29) une matière fondue (28) dans un moule de moulage par injection (26) qui présente une cavité (27) qui présente une première face (27b) pourvue d'une première surface de forme libre (F1') prédéterminée qui correspond à la première surface (F1) du miroir de forme libre (13) et présente une deuxième face (27a) qui correspond à une deuxième surface (F2) opposée à la première surface (F1) et formant une face arrière, dans lequel la première face (27b) de la cavité (27) est opposée à la deuxième face (27a) de la cavité (27) au moins à l'état du moule de moulage par injection (26) rempli de matière (28) ;
- faire passer la matière (28) à l'état solide ; et
- appliquer un revêtement réfléchissant (B) à la matière (28) retirée du moule de moulage par injection (26) sur une première surface (F1) formée par la première face (27b) de la cavité (27) au moins à l'intérieur de segments de surface (S1, S2, S3, S4, S5) prédéterminés qui sont délimités par deux limites de segment de surface (G) respectives dans une première direction (x) et dans la direction opposée et qui subdivisent la première surface (F1) dans la première direction, dans lequel respectivement deux segments de surface (S1, S2, S3, S4, S5) adjacents présentent au niveau de leurs limites de segment de surface (G) tournées les unes vers les autres des orientations différentes les unes des autres d'une valeur finie, et/ou au moins un décalage spatial (Δ) réalisé entre elles, dans lequel la première surface (F1) présente un segment de surface central (S1) et présente dans la première direction et dans la direction opposée par rapport au segment de surface central (S1) respectivement au moins un premier segment de surface (S1, S2, S3, S4, S5).
